# EUROPEAN PATENT SPECIFICATION

(11) **EP 3 154 778 B1**
(45) Date of publication and mention of the grant of the patent: **15.01.2020**
(21) Application number: 15809372.4
(22) Date of filing: 16.06.2015
(51) Int. Cl.: B32B 7/00, B29C 70/86, C25D 11/16, C25D 11/24, C25D 11/12, B32B 7/12, B32B 15/08, B32B 15/20, B29C 70/88, B32B 27/20, B32B 27/38, C25D 11/08, C25D 11/10

(54) **ANODIZED METAL COMPONENT**
ANODISIERTES METALLBAUTEIL
COMPOSANT MÉTALLIQUE ANODISÉ

(30) Priority: 16.06.2014 US 201462012829 P
(43) Date of publication of application: 19.04.2017
(73) Proprietor: Sikorsky Aircraft Corporation, Stratford, CT 06615 (US)
(72) Inventor: DING, Zhongfen, South Windsor, Connecticut 06074 (US); JAWOROWSKI, Mark R., Glastonbury, Connecticut 06033 (US)
(74) Representative: Schmitt-Nilson Schraud Waibel Wohlfrom Patentanwälte Partnerschaft mbB
(86) International application number: PCT/US2015/035994
(87) International publication number: WO 2015/195639

(56) References cited:
- EP-A2- 1 642 745
- US-A- 5 486 283
- US-A- 5 869 196
- US-A- 5 958 578
- US-A1- 2003 008 473
- US-A1- 2005 150 771
- US-A1- 2009 111 086
- US-A1- 2010 088 872
- US-B1- 6 468 613

## Description

### BACKGROUND

Metals such as aluminum alloys have been widely used for years as structural components in various applications such as aircraft and terrestrial motor vehicles. More recently composite materials such as carbon fiber reinforced polymer (CFRP) have been used. These composite materials can provide advantages in strength to weight ratio, and they have been increasingly deployed as replacement materials for metal in structural components. However, composite materials such as CFRP cannot be used as a universal replacement for metal, as they suffer from other limitations such as heat resistance, which necessitate the continued use of metal components in applications where heat resistance or other properties of metals are required. Accordingly, in many applications, both metal materials and composite materials such as CFRP are used in proximity to one another and must often be bonded together.

The bonding of CFRP to metal presents a number of technical challenges. A significant challenge is the prevention of galvanic corrosion. The carbon fibers used in CFRP are electrically conductive, and CFRP has a different electrochemical potential than metals such as aluminum alloys to which it may be bonded. In the presence of moisture, an electrochemical cell can be formed by CFRP and metal components, which leads to galvanic corrosion of the metal. Attempts have been made to electrically insulate bonded CFRP and metal components from one another. For example, US 6,468,613 proposes the use of thicker layers of electrically insulating polymer adhesives. Polymer adhesives, however, can have their physical properties adversely affected by exposure to environmental conditions such as heat, cold, moisture, solvents, etc., which can lead to cracks, holes, or other deformation in the adhesive bond, which can allow the penetration of moisture and galvanic corrosion.

In view of the above, there remains a need to develop alternative materials and techniques for bonding composite materials and metals.

US 2005/0150771 A1 discloses structural components made of aluminum and aluminum alloys anodized in two sequential steps in two different electrolytes. Its first electrolyte is a mixed acid of two inorganic acids such as a phosphoric-sulfuric acid mixture. Its second electrolyte is a further acid mixture of an organic acid and an inorganic acid to form a tartaric sulfuric acid mixture. Its two sequential anodizing steps result in a surface texture that has three excellent surface characteristics simultaneously, namely: a corrosion resistance, a coating acceptance for lacquer coatings and an adhesive bonding with other aluminum material components.

Embodiments of the invention may solve one or more of the problems of the art, with the solutions set forth in the independent claims and refinements as recited in the dependent claims.

### BRIEF DESCRIPTION

According to the invention, an article includes a metal component comprising two anodized metal oxide layers thereon: an inner anodized metal oxide layer having porosity of less than 20%, and an outer anodized metal oxide layer comprising a filament structure with a cross-section filament areal density of greater than 35%. The inner anodized metal oxide layer provides a dense structure that provides a low electrical conductivity barrier. The outer anodized metal oxide layer having a textured filament structure provides a surface for adhesive attachment of a composite component. The article also includes a composite component comprising electrically conductive fibers in a polymer matrix. The composite component is bonded to the metal component by an adhesive disposed between the composite component and the outer anodized metal oxide layer of the metal component.

According to the invention, the method of making the article includes anodizing a metal component in a first anodizing bath to form an outer metal oxide layer comprising a filament structure with a cross-section filament areal density of greater than 35%. After the outer metal oxide layer is formed, the metal component is anodized in a second anodizing bath to form an inner metal oxide layer under the outer metal oxide layer, having a porosity of less than 20%. The anodized surface of the metal component is then bonded with an adhesive to a composite component comprising electrically conductive fibers in a polymer matrix.

In some aspects, the inner anodized metal oxide layer has a porosity of less than 15 %.

In some aspects, the inner anodized metal oxide layer has a thickness of from 1 µm to 4 µm.

In some aspects, the inner anodized metal oxide layer has an electrical resistance of more than 1 gigaohm.

In some aspects, the outer anodized metal oxide layer has a thickness of from 0.2 µm to 0.8 µm.

In some aspects, the outer metal oxide layer has a cross-section filament areal density of greater than 35% - 50%.

In some aspects, the bonded adhesive strength between the composite component and the outer anodized metal oxide layer of the metal component is greater than 6000 psi.

In some aspects, the metal component comprises aluminum or an aluminum alloy such as Al alloy 2xxx, 6xxx, or 7xxx. In some aspects, the metal component comprises titanium or a titanium alloy.

In some aspects, the conductive fibers are carbon fibers, including but not limited to carbon nanowires.

According to the invention, pores in the outer anodized metal oxide layer are sealed.

In some aspects, the article includes a primer coating disposed between the outer anodized metal oxide layer and the adhesive.

In some aspects, the second anodizing bath comprises sulfuric acid and an organic acid comprising at least two carboxylic acid groups. In further aspects, the sulfuric acid concentration is from 20 gram/liter to 60 gram /liter, and the organic acid (e.g., tartaric acid) concentration is from 60 gram/liter to 100gram/liter.

In some aspects, the anodizing voltage applied ranges from 12V to 20V, and the anodizing bath temperature is maintained between 18°C to 35°C.

In some aspects, the metal article is deoxidized in a deoxidizing bath before anodizing in the first anodizing bath. The deoxidizing bath is a phosphoric acid bath having a different phosphoric acid concentration than the first anodizing bath.

According to the invention, the method further comprises sealing pores of the outer metal oxide layer. In some further aspects, the pores are sealed by contacting with an aminophosphonic acid and/or a nitrilotrismethylene phosphoric acid (NTMP).

In some aspects, a primer coating is applied to the outer metal oxide layer before bonding the composite component to the anodized metal component.

### BRIEF DESCRIPTION OF THE DRAWINGS

The foregoing and other features, and advantages of the disclosure are apparent from the following detailed description taken in conjunction with the accompanying figures, in which:
FIG. 1 is a schematic depiction of a cross-section view of a metal component having inner and outer anodized metal oxide layers; and
FIG. 2 is a schematic depiction of a cross-section view of a metal component having inner and outer anodized metal oxide layers, bonded to a composite component comprising conductive fibers in a polymer matrix.

### DETAILED DESCRIPTION

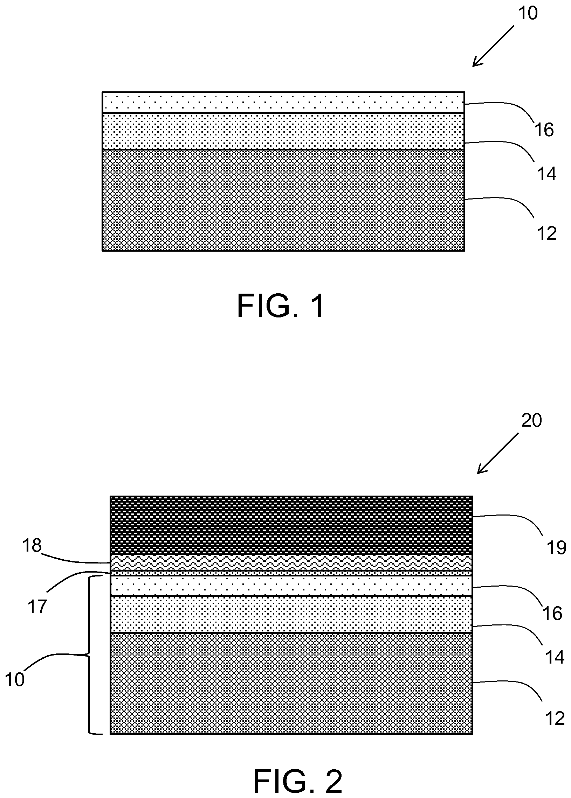

With reference to the Figures, FIG. 1 depicts a cross-section view of a metal component having inner and outer anodized metal oxide layers. As shown in FIG. 1, metal component 10 includes a metal substrate 12 having thereon an inner anodized metal oxide layer 14 and an outer anodized metal oxide layer 16.

The metal substrate 12 can be formed of aluminum or an aluminum alloy such as series 1000 to 8000 aluminum alloys. Pure aluminum, which is series 1000, can provide formability and corrosion resistance, and Al-Cu-Mg alloys (series 2000) provide enhanced strength and toughness. Al-Mn alloys (series 3000) also offer formability properties while Al-Si alloys (series 4000) are characterized by high strength. Al-Mg alloys (series 5000) can provide formability, while series 6000 Al--Mg--Si alloys can provide strength, toughness, formability and corrosion resistance. Series 7000 Al-Zn(-Mg) alloys also provide strength and toughness. One skilled in the art can readily choose an appropriate aluminum alloy based on product design (i.e., the degree of formability) and specifications (physical properties, e.g., strength). Other anodizable metals can be used as well, such as titanium and titanium alloys.

As mentioned above, inner anodized metal oxide layer 14 has a porosity less than 20%. Porosity percentages disclosed are the volume percent pore space in the layer based on total layer volume. Porosity as defined herein, is determined by comparing the density of the inner anodized metal oxide layer with that of dense aluminum oxide. The density of the inner anodized metal oxide layer 14 can be calculated from coating weight and coating thickness. The coating weight can be determined according to ANSI/ASTM B137-95(2009) specifications. The coating thickness can be measured from cross section SEM images. In more specific embodiments, inner anodized metal oxide layer 14 has a porosity of less than 15%, and more specifically less than or equal to 13%. The thickness of the inner anodized metal oxide layer 14 can range from 1 µm to 4 µm, and more specifically from 1.5 µm to 2.5 µm. Inner anodized metal oxide layer 14, is formed after the formation of outer anodized metal oxide layer 16, and can be formed by anodizing the metal component 10 in an anodizing bath containing sulfuric acid. In some aspects of the disclosure, the second anodizing bath comprises sulfuric acid and an organic acid comprising two or more carboxylic acid groups per molecule. Exemplary organic acids include tartaric acid and citric acid. Mixtures of organic acids can also be used. In further aspects, the sulfuric acid concentration is from 20 g/l to 60 g/l. In more specific aspects, the sulfuric acid concentration ranges from 35 g/l to 45 g/l, and even more specifically is 40 g/l. In some embodiments, the concentration of the organic acid (e.g., tartaric acid) concentration is from 60 g/l to 100g/l, more specifically 70 g/l to 90 g/l, and even more specifically 80 g/l. Anodizing current is applied as DC current with ramp voltage increased from 0 to a plateau voltage over a period of 1 to 3 minutes. The plateau voltage can vary from 12 V to 20 V, and is maintained for a duration of from 15 to 60 minutes. The anodizing temperature can range from 18°C to 35°C, more specifically from 30°C to 35°C. Although the disclosure is not bound by any particular mode or theory of operation, it is believed that the inner anodized metal oxide layer 14 contributes to electrical isolation of the metal component from the electrically conductive composite component. In some embodiments, inner anodized metal oxide layer 14 provides electrical resistance higher than 1 gigaohm. In some embodiments, inner anodized metal oxide layer 14 provides a point probe contact resistance higher than 10 gigaohms. It is believed that inner anodized metal oxide layer 14 thickness will increase the electrical resistance. In some embodiments, the inner anodized metal oxide layer 14 has a thickness of from 1 µm to 4 µm. In some embodiments, the inner anodized metal oxide layer 14 has a thickness of from 1.5 µm to 2.5 µm. In some embodiments, the second anodizing process for the formation of inner anodized metal oxide layer 14 is carried out by ramping up a DC potential to a range from 12V to 20V (e.g., 13V) within 2-3 minutes. In some embodiments, the inner anodized metal oxide layer 14 is allowed to grow from 10 minutes to 1 hour, e.g., 20 minutes.

As mentioned above, the outer metal oxide layer 16 comprises a filament structure, i.e., a structure comprising metal oxide filaments in a metal oxide matrix. The filament structure has a cross-section filament areal density greater than 35%. Cross-section filament areal density is determined by examination of a cross-section scanning electron microscope image of the layer in a plane perpendicular to the surface of the layer, and visually measuring the area of the total area in the cross-section represented by filaments as a percentage of the entire cross-section area. In more specific embodiments, the cross-section filament areal density is greater than 40%. In some embodiments, the cross-section filament areal density has an upper limit of 60%, and more specifically 50%. In some aspects of the disclosure, the outer anodized metal oxide layer 16 has a filament cross section density of 35% - 50%. In some aspects of the disclosure, the outer anodized metal oxide layer 16 has a filament cross section density of 40% - 50%. The thickness of the outer anodized metal oxide layer 16 can range from 0.2 µm to 0.8 µm, and more specifically from 0.35 µm to 0.5 µm. In some aspects of the disclosure, the outer anodized metal oxide layer 16 has a thickness of from 0.2 µm to 0.8 µm. In some aspects of the disclosure, the outer anodized metal oxide layer 16 has a thickness of from 0.3 µm to 0.5 µm. In some embodiments, the outer anodized metal oxide layer 16 has a porosity of at least 40 % (by cross section areal %), and more specifically at least 50 %. Although the disclosure is not bound by any particular mode or theory of operation, it is believed that the outer anodized metal oxide layer 16 provides a surface to which an adhesive and/or primer layer can effectively bond.

Outer anodized metal oxide layer 16 is typically formed before the formation of inner anodized metal oxide layer 14, and can be formed by anodizing the metal component 10 in an anodizing bath containing phosphoric acid. The anodizing bath that can be used to form the outer anodized metal oxide layer 16 can be a phosphoric acid bath with a concentration range from 6 vol% to 9 vol%. In some embodiments, the outer anodized metal oxide layer 16 has a textured surface adapted to bond with an adhesive. Such a textured surface can be provided by various known techniques such as embossing or other mechanical processes or by chemical etching. In some embodiments, a textured surface can be provided by the use of a phosphoric acid anodizing (PAA) bath, which forms a metal oxide layer having filament structures that provide surface texture that can further enhance and/or promote adhesion. The total concentration of phosphoric acid in the anodizing bath used to produce the outer anodized metal oxide layer 16 can range from 6% to 9% in volume, and more specifically from 6.5% to 8% in volume. Anodizing current is applied as DC current with ramp voltage increased from 0 to a plateau voltage over a period of 1 to 3 minutes. The plateau voltage can vary from 14.5 V to 15.5 V, and is maintained for a duration of from 18 to 22 minutes. The anodizing bath temperature is maintained in a range between 18°C to 25°C. The current density ranges from 3 mA/cm² to 15 mA/cm² depending on the anodizing temperature, phosphoric acid concentration, anodizing voltage, and the specific aluminum alloy types in use. In some embodiments, the metal article is electrolytically deoxidized in a phosphoric acid bath before anodizing. The acid concentration of the deoxidizing phosphoric acid can have a different concentration e.g., 15 vol%) than the first anodizing phosphoric acid bath (e.g., 7.5 vol%). In some embodiments, the deoxidizing bath is kept at 25°C to 29°C (e.g., 29°C) while the first anodizing bath is kept at 20°C to 25°C (e.g., 22°C). In a specific embodiment, the deoxidizing can be carried out at a DC potential of 7.5V for 15 minutes, and the first anodizing bath has a temperature of 22°C and the anodizing is carried out with a DC potential of 15V for 20 minutes.

According to the invention, pores in the outer anodized metal oxide layer 16 are sealed. According to the invention, pores in the inner anodized metal oxide layer 14 are also sealed. Sealing the pores can help to improve the barrier properties and corrosion protection provided by the anodized metal oxide layers 14, 16. Sealing can also protect the fibrous structures formed by anodization in a phosphoric acid bath. These fibrous structures are susceptible to moisture and humidity, and sealing the pores can provide a longer shelf life of the anodized metal oxide fibrous structures before subsequent processing such as priming. Pores in anodized metal oxide layers can be sealed by various materials and techniques, such as prolonged immersion in boiling deionized water. This technique converts the metal oxide to its hydrate form, and the resulting swelling tends to close the pores. Sealing of the pores in outer anodized metal oxide layer 16 with a nitrogen-containing phosphonic acid such as an aqueous aminophosphonic acid (e.g., nitrilotrismethylene triphosphonic acid) or nitrilotrismethylene phosphonic acid (NTMP) provides effective pore sealing and enhanced adhesion, forming covalent bonds with hydrated metal oxide, and also bonding with epoxy groups in an adhesive or primer coating by reaction with nitrogen-containing groups on the acid. In some further aspects, the pores are sealed by contacting a mixed sealing solution that contains NTMP, and trivalent chrome, and zirconium hexafluoride anions. In some aspects of the disclosure, the sealing is performed by soaking the anodized Al part in 200 ppm to 1000 ppm NTMP solution. In some aspects of the disclosure, the sealing is performed by exposing the anodized Al part in a 300 ppm NTMP aqueous solution.

Turning again to the figures, FIG. 2 depicts a cross-section view of an article 20 comprising the metal component 10 bonded to a composite component 19 comprising conductive fibers in a polymer matrix. As shown in FIG. 2, metal component 10 having metal substrate 12, inner anodized metal oxide layer 14, and outer metal oxide layer 16 has optional primer layer 17 thereon. The primer layer can comprise any of a number of types of polymer resins, including but not limited to epoxy resins, acrylic resins, urethanes, polyesters, and combinations thereof. In some embodiments, the resin is functionalized with or the coating composition comprises groups that are reactive with amino groups such as amino groups provided by an aminophosphonic acid pore sealing agent. Resins can also be functionalized with groups for crosslinking reactions during cure. Coating compositions comprising or capable of reacting to produce such resins can be applied as powder spray, or dispersed in water or organic solvent and applied by spray, roll, brush, dip, or other coating methods. In some aspects of the disclosure, the inner anodized metal oxide layer 14 is also impregnated with primer.

As further shown in FIG. 2, composite component 19 is bonded to the metal component 10 with adhesive 18. Composite component 19 includes electrically conductive fibers disposed in a resin matrix. Carbon fibers are often used for their beneficial strength to weight ratio, but the galvanic corrosion effects of the disclosure can be achieved with any other type of conductive fiber or filler such as steel or other conductive metals. In some embodiments, the conductive fibers are carbon fibers. In some embodiments, the composite is composed of carbon nanowires (i.e., carbon fibers with a diameter of 100 nm - 10 µm) as the reinforcing component. In some embodiments, the conductive fibers are made from other conductive nanowires such as metal cellular structures. The resin can be any of a number of known resin systems, including epoxy resins, phenolic resins, polyester resins, vinyl ester resins, and also thermoplastic resins such as polycarbonate, polyacetal, ABS, etc. Fiber-reinforced composite components can be prepared using a variety of techniques, as is known in the art. With some techniques, the fibers are dispersed in a binder that is in powder or fluid form and the binder is molded and cured. For example, with a thermoplastic polymer binder, the fibers can be dispersed in polymer that has been heated to its fluid state (often called a "melt"), or they can be dispersed with polymer powder that is then heated to its fluid state. The fluid polymer with fibers dispersed therein can then be formed into a fiber-reinforced composite material by conventional techniques such as extrusion, injection molding, or blow molding. With thermoset polymers, the fibers can be dispersed among the reactive components, which are then cured to form the fiber-reinforced composite material. In some embodiments, a pre-formed fiber mat is impregnated with a fluid matrix binder material that is then cured or otherwise solidified to form the fiber-reinforced composite material. Another common technique is to impregnate a pre-formed fiber mat with a curable resin such as an epoxy resin. This article, also called a pre-preg or pre-form, can then be incorporated into a layup on a mold, optionally along with other pre-forms or pre-pregs, and subjected to heat and/or pressure to cure the resin, thereby forming the fiber-reinforced composite.

Various adhesive compounds and compositions can be used as adhesive 18. Examples of adhesives include epoxy adhesives, acrylic adhesives, urethane adhesives, silicone adhesives, etc. Adhesives can utilize various curing mechanisms, including polymerization and/or crosslinking, which can be initiated and/or promoted via radiation, heat, moisture, or which may proceed spontaneously in the case of reactive component mixtures mixed immediately prior to application. Adhesives can also cure by solvent evaporation or, in the case of hot melt adhesives, by cooling. In some embodiments, an adhesive composition includes groups such as epoxy groups that are reactive with amine groups, such as amine groups derived from an aminophosphonic acid pore sealing agent.

Further disclosure is found in the following non-limiting example(s).

### Comparative Example 1

An Al alloy sheet (Al 2024) was washed with organic solvents to remove surface paints or stains. The sheet was then etched with sodium hydroxide aqueous solution (50 g/L) for ninety seconds and rinsed with water thoroughly. The etched Al alloy sheet was then deoxidized in nitric acid solution (400g/L) for sixty seconds and followed with thorough water wash. Check that there is no visible water break.

The Al alloy sheet was then electrochemically deoxidized in phosphoric acid under the following condition:
15 v% phosphoric acid aqueous solution
29°C solution temperature
Voltage ramp from 0V to 7.5V within a minute
Keep the voltage at 7.5V for 15 minutes

The Al alloy sheet was immediately removed from the deoxidizing bath and then rinsed with water. Check to make sure that there is no visible water break. The Al alloy sheet was then anodized in phosphoric acid as following to grow a phosphoric acid anodized layer (PAA):
7.5 v% phosphoric acid aqueous solution
Room temperature
Voltage ramp at approximately 5V/min to 15V within 3 minutes
Keep the voltage at 15V for 20 minutes

The Al alloy sheet was immediately removed from phosphoric anodizing bath and rinsed with water. Check to see that there was no visible water break. The Al alloy sheet was then immersed in a 300ppm nitrilotrismethylene phosphonic acid (NTMP) at room temperature for 15 minutes for sealing.

The PAA layer thus grown on aluminum alloy sheet surface was characterized by cross-section SEM. The PAA layer was porous and had a thickness of approximately 0.4 micrometer and had a textured feature which could bond very strongly with epoxy adhesives. The adhesive strength tested using single lap shear tests (ASTM D1002-10) was found to be limited by the cohesive failure strength of the adhesive, at 6000psi. If adhesives of higher strength were used for the testing, even higher adhesive strength should have been measured.

The textured PAA layer did not provide electrical barrier property. Touch probe testing results indicate that the direct current electrical resistance of the PAA layer was similar to that of bare metal, on the order of a few ohms of contact resistance.

### Example 2

An Al alloy sheet (A12024) was washed with organic solvents to remove surface paints or stains. The sheet was then etched with sodium hydroxide aqueous solution (50 g/L) for ninety seconds and rinsed with water thoroughly. The etched Al alloy sheet was then deoxidized in nitric acid solution (400g/L) for sixty seconds and followed with thorough water wash. Check that there is no visible water break.

The Al alloy sheet was then electrochemically deoxidized in phosphoric acid under the following condition:
15 v% phosphoric acid aqueous solution
29°C solution temperature
Voltage ramp from 0V to 7.5V within a minute
Keep the voltage at 7.5V for 15 minutes.

The Al alloy sheet was immediately removed from the deoxidizing bath and then rinsed with water. Check to make sure that there is no visible water break. The Al alloy sheet was then anodized in phosphoric acid as following to grow a phosphoric acid anodized layer (PAA):
7.5 v% phosphoric acid aqueous solution
Room temperature
Voltage ramp at approximately 5V/min to 15V within 3 minutes
Keep the voltage at 15V for 20 minutes

The Al alloy sheet was immediately removed from the phosphoric acid anodizing bath and then rinsed with water. Check to make sure that there was no visible water break. The Al alloy sheet was then immersed in a second anodizing bath that was composed of a mixture of sulfuric acid and tartaric acid. An example of the second anodizing step was as following:
Tartaric acid 80g/L + Sulfuric acid 40g/L
35°C electrolyte bath temperature
Voltage ramp at approximately 5V/min to 13V within 3 minutes
Keep the voltage at 13V for 20 minutes

The Al alloy sheet was immediately removed from tartaric sulfuric acid anodizing bath and rinsed with water. Check to see that there was no visible water break. The Al alloy sheet was then immersed in a 300ppm nitrilotrismethylene phosphonic acid (NTMP) at room temperature for 15 minutes for sealing.

The duplex anodized coating on the aluminum alloy sheet was characterized using cross-section SEM. The anodized coating was composed of two distinctive layers, one dense layer from tartaric sulfuric acid anodizing with a thickness of approximately 2.5 micrometer was grown on the Al alloy substrate whereas a textured PAA layer of approximately 0.4 micrometer in thickness was grown on the dense TSAA layer.

Single lap shear testing (ASTM D1002-10) was used to characterize the adhesive bonding strength of the duplex anodized film. All the coupons tested failed cohesively, indicating that the adhesive strength was limited by the adhesives used for the bonding. The adhesive strength results were the same as PAA coating, i.e. 6000psi. If stronger adhesives were used for the testing, higher adhesive strength would have been achieved for the duplex anodized coating as well.

Touch probe testing of the duplex anodized coating showed that it was an electrically insulator. The contact resistance was consistently higher than 1 gigaOhm, the detection limit of the multimeter used. The duplex anodized layer thus served as an electrical barrier to prevent galvanic corrosion if the Al alloy sheet needs to be in contact with dissimilar conductive material, such as CFRP or other metals.

The duplex anodized and sealed film was also tested using potentiodynamic technique for corrosion barrier properties. Comparing to the phosphoric acid anodized film, the corrosion current of the duplex anodized film was reduced more than 1 order of magnitude, indicating significant corrosion barrier property.

The potentiodynamic testing results of the duplex coating were also comparable with state-of-the-art dense anodized coatings for Al alloys, such as boric sulfuric anodized coating, chromic acid anodized coating, and tartaric sulfuric acid anodized coating.

### Numbered Embodiments

The following numbered embodiments are disclosed to provide written disclosure support for multiple dependent claims in various designated States:
Embodiment 1: An article, comprising:
   a metal component comprising a metal substrate, an inner anodized metal oxide layer having a porosity of less than 20%, and an outer anodized metal oxide layer comprising a filament structure with a cross section filament areal density of greater than 35%;
   a composite component comprising electrically conductive fibers in a polymer matrix; and
   an adhesive disposed between the composite component and the outer anodized metal oxide layer of the metal component, which bonds the composite component to the metal component.
Embodiment 2: The article of Embodiment 1, wherein the inner anodized metal oxide layer has a porosity of less than 15 %.
Embodiment 3: The article of Embodiments 1 or 2, wherein the inner anodized metal oxide layer has a thickness of from 1 µm to 4 µm.
Embodiment 4: The article of any of Embodiments 1-3, wherein the inner anodized metal oxide layer has a resistance of greater than 1 gigaohm.
Embodiment 5: The article of any of Embodiments 1-4, wherein the outer anodized metal oxide layer has a thickness of from 0.2 µm to 0.8 µm.
Embodiment 6: The article of any of Embodiments 1-5, wherein the outer anodized metal oxide layer has a cross section filament density range from 35% to 50%.
Embodiment 7: The article of any of Embodiments 1-6, having an adhesive strength between the bonded metal article and composite article of greater than 6000 psi.
Embodiment 8: The article of any of Embodiments 1-7, wherein the metal article comprises aluminum or an aluminum alloy or titanium or a titanium alloy.
Embodiment 9: The article of any of Embodiments 1-8, wherein the conductive fibers are carbon fibers.
Embodiment 10: The article of any of Embodiments 1-9, wherein pores in the outer anodized metal oxide layer are sealed.
Embodiment 11: The article of any of Embodiments 1-10, further comprising a primer coating disposed between the outer anodized metal oxide layer and the adhesive.
Embodiment 12: A method of making an article according to any of Embodiments 1-11, comprising:
   anodizing the metal component in a first anodizing bath to form the outer metal oxide layer; then
   anodizing the metal component in a second anodizing bath to form the inner metal oxide layer under the outer metal oxide layer; and
   bonding a composite component comprising electrically conductive fibers in a polymer matrix to the anodized metal component with an adhesive.
Embodiment 13: The method of Embodiment 12, wherein the second anodizing bath comprises sulfuric acid and tartaric acid.
Embodiment 14: The method of Embodiment 13, wherein the sulfuric acid concentration ranges from 20 gram/liter to 60 gram/liter, and the tartaric acid concentration ranges from 60 gram/liter to 100 gram/liter.
Embodiment 15: The method of any of Embodiments 12-14, wherein the first anodizing bath voltage ranges from 12V to 20V and the bath temperature is maintained between 18°C to 35°C.
Embodiment 16: The method of any of Embodiments 12-15, wherein the first anodizing bath is a phosphoric acid bath.
Embodiment 17: The method of Embodiment 16, further comprising deoxidizing the metal article in a phosphoric acid deoxidizing bath before anodizing in the first anodizing bath, wherein the deoxidizing bath is also a phosphoric acid bath having a different phosphoric acid concentration than the first anodizing bath.
Embodiment 18: The method of any of Embodiments 12-17, further comprising sealing pores of the outer metal oxide layer.
Embodiment 19: The method of Embodiment 18, wherein pores of the outer metal oxide layer are sealed by contacting with an aminophosphonic acid or nitrilotrismethylene phosphoric acid.
Embodiment 20: The method of any of Embodiments 12-19, further comprising applying a primer coating to the outer metal oxide layer before bonding the composite component to the anodized metal component.

While the disclosure has been described in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the scope of the claims. Additionally, while various embodiments of the disclosure have been described, it is to be understood that aspects of the disclosure may include only some of the described embodiments. Accordingly, the disclosure is not to be seen as limited by the foregoing description, but is only limited by the scope of the claims.

## Claims

1. An article (20), comprising:
a metal component (10) comprising a metal substrate (12), an inner anodized metal oxide layer (14) having a porosity of less than 20%, and an outer anodized metal oxide layer (16) comprising a filament structure with a cross section filament areal density of greater than 35%;
a composite component (19) comprising electrically conductive fibers in a polymer matrix; and
an adhesive (18) disposed between the composite component (19) and the outer anodized metal oxide layer (16) of the metal component (10), which bonds the composite component (19) to the metal component (10),
wherein the cross section filament areal density is determined by examination of a cross-section scanning electron microscope image of a layer in a plane perpendicular to a surface of the layer, and visually measuring an area in the cross-section represented by filaments as a percentage of an entire cross-section area,
wherein the inner anodized metal oxide layer (14) is distinctive from the outer anodized metal oxide layer (16),
wherein the inner anodized metal oxide layer (14) is formed after formation of the outer anodized metal oxide layer (16),
and wherein at least a portion of pores formed in the inner anodized metal oxide layer (14) and the outer anodized metal oxide layer (16) are sealed,
**characterized in that** at least a portion of the pores of the outer anodized metal oxide layer (16) are sealed with a nitrogen-containing phosphonic acid.

2. The article (20) of claim 1, wherein the inner anodized metal oxide layer (14) has a porosity of less than 15 % and/or a thickness of from 1 µm to 4 µm and/or a resistance of greater than 1 gigaohm.

3. The article (20) of claim 1, wherein the outer anodized metal oxide layer (16) has a thickness of from 0.2 µm to 0.8 µm.

4. The article (20) of claim 1, wherein the outer anodized metal oxide layer (16) has a cross section filament density range from 35% to 50%.

5. The article (20) of claim 1, having an adhesive strength between the bonded metal component (10) and composite component (19) of greater than 6000 psi.

6. The article (20) of claim 1, wherein the metal component (10) comprises aluminum or an aluminum alloy or titanium or a titanium alloy.

7. The article (20) of claim 1, wherein the conductive fibers are carbon fibers.

8. The article (20) of claim 1, wherein the pores in the outer anodized metal oxide layer (16) are sealed.

9. The article (20) of claim 1, further comprising a primer coating (17) disposed between the outer anodized metal oxide layer (16) and the adhesive (18).

10. A method of making an article (20) according to claim 1, comprising:
anodizing the metal component (10) in a first anodizing bath to form the outer anodized metal oxide layer (16); then
anodizing the metal component (10) in a second anodizing bath to form the inner anodized metal oxide layer (14) under the outer anodized metal oxide layer (16); and
bonding a composite component (19) comprising electrically conductive fibers in a polymer matrix to the anodized metal component (10) with an adhesive (18),
**characterized in** sealing pores of the outer anodized metal oxide layer (16) with a nitrogen-containing phosphonic acid.

11. The method of claim 10, wherein the second anodizing bath comprises sulfuric acid and tartaric acid, particularly wherein the sulfuric acid concentration ranges from 20 gram/liter to 60 gram/liter and the tartaric acid concentration ranges from 60 gram/liter to 100 gram/liter.

12. The method of claim 10 wherein the first anodizing bath voltage ranges from 12V to 20V and the bath temperature is maintained between 18°C to 35°C.

13. The method of claim 10, wherein the first anodizing bath is a phosphoric acid bath, particularly further comprising deoxidizing the metal component (10) in a phosphoric acid deoxidizing bath before anodizing in the first anodizing bath,
wherein the deoxidizing bath is also a phosphoric acid bath having a different phosphoric acid concentration than the first anodizing bath.

14. The article (20) of claim 1 or the method of claim 10, wherein pores of the outer anodized metal oxide layer (16) are sealed by contacting with an aminophosphonic acid, such as nitrilotrismethylene phosphonic acid.

15. The method of claim 10, further comprising applying a primer coating (17) to the outer anodized metal oxide layer (16) before bonding the composite component (19) to the anodized metal component (10).

## Patentansprüche

1. Erzeugnis (20), umfassend:
ein Metallbauteil (10), umfassend ein Metallsubstrat (12), eine innere anodisierte Metalloxidschicht (14) mit einer Porosität von kleiner als 20 % und eine äußere anodisierte Metalloxidschicht (16), umfassend eine Filamentstruktur mit einer Querschnittsfilamentflächendichte von größer als 35 %;
ein Verbundbauteil (19), umfassend elektrisch leitfähige Fasern in einer Polymermatrix; und
ein Haftmittel (18), das zwischen dem Verbundbauteil (19) und der äußeren anodisierten Metalloxidschicht (16) des Metallbauteils (10) angeordnet ist, welches das Verbundbauteil (19) mit dem Metallbauteil (10) verbindet,
wobei die Querschnittsfilamentflächendichte durch Untersuchung einer rasterelektronenmikroskopischen Querschnittsaufnahme einer Schicht in einer Ebene senkrecht zu einer Oberfläche der Schicht und visuelles Messen einer Fläche im Querschnitt, die durch Filamente repräsentiert ist, als ein Anteil einer gesamten Querschnittsfläche bestimmt wird,
wobei sich die innere anodisierte Metalloxidschicht (14) von der äußeren anodisierten Metalloxidschicht (16) unterscheidet,
wobei die innere anodisierte Metalloxidschicht (14) nach Bildung der äußeren anodisierten Metalloxidschicht (16) gebildet wird,
und wobei wenigstens ein Teil von Poren, die in der inneren anodisierten Metalloxidschicht (14) und der äußeren anodisierten Metalloxidschicht (16) gebildet werden, versiegelt wird,
**dadurch gekennzeichnet, dass** wenigstens ein Teil der Poren der äußeren anodisierten Metalloxidschicht (16) mit einer stickstoffhaltigen Phosphonsäure versiegelt wird.

2. Erzeugnis (20) nach Anspruch 1, wobei die innere anodisierte Metalloxidschicht (14) eine Porosität von weniger als 15 % und/oder eine Dicke von 1 µm bis 4 µm und/oder einen Widerstand von mehr als 1 Gigaohm aufweist.

3. Erzeugnis (20) nach Anspruch 1, wobei die äußere anodisierte Metalloxidschicht (16) eine Dicke von 0,2 µm bis 0,8 µm aufweist.

4. Erzeugnis (20) nach Anspruch 1, wobei die äußere anodisierte Metalloxidschicht (16) einen Querschnittsfilamentdichtebereich von 35 % bis 50 % aufweist.

5. Erzeugnis (20) nach Anspruch 1, das eine Haftfestigkeit zwischen dem verbundenen Metallbauteil (10) und Verbundbauteil (19) von größer als 6000 psi aufweist.

6. Erzeugnis (20) nach Anspruch 1, wobei das Metallbauteil (10) Aluminium oder eine Aluminiumlegierung oder Titan oder eine Titanlegierung umfasst.

7. Erzeugnis (20) nach Anspruch 1, wobei es sich bei den leitfähigen Fasern um Kohlenstofffasern handelt.

8. Erzeugnis (20) nach Anspruch 1, wobei die Poren in der äußeren anodisierten Metalloxidschicht (16) versiegelt sind.

9. Erzeugnis (20) nach Anspruch 1, ferner umfassend eine Grundierungsbeschichtung (17), die zwischen der äußeren anodisierten Metalloxidschicht (16) und dem Haftmittel (18) angeordnet ist.

10. Verfahren zum Herstellen eines Erzeugnisses (20) nach Anspruch 1, umfassend:
Anodisieren des Metallbauteils (10) in einem ersten Anodisierungsbad, um die äußere anodisierte Metalloxidschicht (16) zu bilden; dann
Anodisieren des Metallbauteils (10) in einem zweiten Anodisierungsbad, um die innere anodisierte Metalloxidschicht (14) unter der äußeren anodisierten Metalloxidschicht (16) zu bilden; und
Verbinden eines Verbundbauteils (19), das elektrisch leitfähige Fasern in einer Polymermatrix umfasst, mit dem anodisierten Metallbauteil (10) mit einem Haftmittel (18),
**gekennzeichnet durch** Versiegeln von Poren der äußeren anodisierten Metalloxidschicht (16) mit einer stickstoffhaltigen Phosphonsäure.

11. Verfahren nach Anspruch 10, wobei das zweite Anodisierungsbad Schwefelsäure und Weinsäure umfasst, insbesondere wobei die Schwefelsäurekonzentration im Bereich von 20 Gramm/Liter bis 60 Gramm/Liter liegt und die Weinsäurekonzentration im Bereich von 60 Gramm/Liter bis 100 Gramm/Liter liegt.

12. Verfahren nach Anspruch 10, wobei die Spannung im ersten Anodisierungsbad im Bereich von 12 V bis 20 V liegt und die Badtemperatur zwischen 18 °C bis 35 °C gehalten wird.

13. Verfahren nach Anspruch 10, wobei das erste Anodisierungsbad ein Phosphorsäurebad ist, insbesondere ferner umfassend Desoxidieren des Metallbauteils (10) in einem desoxidierenden Phosphorsäurebad vor dem Anodisieren im ersten Anodisierungsbad,
wobei das desoxidierende Bad ebenfalls ein Phosphorsäurebad mit einer anderen Phosphorsäurekonzentration als das erste Anodisierungsbad ist.

14. Erzeugnis (20) nach Anspruch 1 oder Verfahren nach Anspruch 10, wobei Poren der äußeren anodisierten Metalloxidschicht (16) durch Inkontaktbringen mit einer Aminophosphonsäure, wie z. B. Nitrilotrismethylenphosphonsäure, versiegelt sind.

15. Verfahren nach Anspruch 10, ferner umfassend Aufbringen einer Grundierungsbeschichtung (17) auf die äußere anodisierte Metalloxidschicht (16) vor dem Verbinden des Verbundbauteils (19) mit dem anodisierten Metallbauteil (10).

## Revendications

1. Article (20), comprenant :
un composant métallique (10) comprenant un substrat métallique (12), une couche interne d'oxyde métallique anodisé (14) ayant une porosité inférieure à 20 %, et une couche externe d'oxyde métallique anodisé (16) comprenant une structure de filament avec une densité de surface de filament en coupe transversale supérieure à 35 % ;
un composant composite (19) comprenant des fibres électriquement conductrices dans une matrice polymère ; et
un adhésif (18) disposé entre le composant composite (19) et la couche externe d'oxyde métallique anodisé (16) du composant métallique (10), qui lie le composant composite (19) au composant métallique (10),
dans lequel la densité de surface de filament en coupe transversale est déterminée par l'examen d'une image de microscope électronique à balayage en coupe transversale d'une couche dans un plan perpendiculaire à une surface de la couche, et par la mesure visuelle d'une zone dans la coupe transversale représentée par des filaments sous forme de pourcentage d'une zone en coupe transversale entière,
dans lequel
la couche interne d'oxyde métallique anodisé (14) est distincte de la couche externe d'oxyde métallique anodisé (16),
dans lequel
la couche interne d'oxyde métallique anodisé (14) est formée après la formation de la couche externe d'oxyde métallique anodisé (16),
et dans lequel
au moins une partie des pores formés dans la couche interne d'oxyde métallique anodisé (14) et la couche externe d'oxyde métallique anodisé (16) est bouchée,
**caractérisé en ce**
**qu'**au moins une partie des pores de la couche externe d'oxyde métallique anodisé (16) est bouchée par un acide phosphonique contenant de l'azote.

2. Article (20) selon la revendication 1, dans lequel la couche interne d'oxyde métallique anodisé (14) a une porosité inférieure à 15 % et/ou une épaisseur de 1 µm à 4 µm et/ou une résistance supérieure à 1 gigaohm.

3. Article (20) selon la revendication 1, dans lequel la couche externe d'oxyde métallique anodisé (16) a une épaisseur de 0,2 µm à 0,8 µm.

4. Article (20) selon la revendication 1, dans lequel la couche externe d'oxyde métallique anodisé (16) a une densité de filament en coupe transversale de 35 % à 50 %.

5. Article (20) selon la revendication 1, ayant une force adhésive entre le composant métallique lié (10) et le composant composite (19) supérieure à 6 000 psi.

6. Article (20) selon la revendication 1, dans lequel le composant métallique (10) comprend de l'aluminium ou un alliage d'aluminium ou du titane ou un alliage de titane.

7. Article (20) selon la revendication 1, dans lequel les fibres conductrices sont des fibres de carbone.

8. Article (20) selon la revendication 1, dans lequel les pores dans la couche externe d'oxyde métallique anodisé (16) sont bouchés.

9. Article (20) selon la revendication 1, comprenant en outre un revêtement d'apprêt (17) disposé entre la couche externe d'oxyde métallique anodisé (16) et l'adhésif (18).

10. Procédé de fabrication d'un article (20) selon la revendication 1, comprenant :
l'anodisation du composant métallique (10) dans un premier bain d'anodisation pour former la couche externe d'oxyde métallique anodisé (16) ; puis
l'anodisation du composant métallique (10) dans un second bain d'anodisation pour former la couche interne d'oxyde métallique anodisé (14) sous la couche externe d'oxyde métallique anodisé (16) ; et
la liaison d'un composant composite (19) comprenant des fibres électriquement conductrices dans une matrice polymère au composant métallique anodisé (10) avec un adhésif (18),
**caractérisé par** le bouchage des pores de la couche externe d'oxyde métallique anodisé (16) avec un acide phosphonique contenant de l'azote.

11. Procédé selon la revendication 10, dans lequel le second bain d'anodisation comprend de l'acide sulfurique et de l'acide tartrique, en particulier dans lequel la concentration en acide sulfurique est comprise entre 20 grammes/litre et 60 grammes/litre et la concentration en acide tartrique est comprise entre 60 grammes/litre et 100 grammes/litre.

12. Procédé selon la revendication 10, dans lequel la tension du premier bain d'anodisation est comprise entre 12 V et 20 V et la température du bain est maintenue entre 18 °C et 35 °C.

13. Procédé selon la revendication 10, dans lequel le premier bain d'anodisation est un bain d'acide phosphorique, en particulier comprenant en outre la désoxydation du composant métallique (10) dans un bain de désoxydation d'acide phosphorique avant l'anodisation dans le premier bain d'anodisation,
dans lequel le bain de désoxydation est également un bain d'acide phosphorique ayant une concentration en acide phosphorique différente de celle du premier bain d'anodisation.

14. Article (20) selon la revendication 1 ou procédé selon la revendication 10, dans lequel les pores de la couche externe d'oxyde métallique anodisé (16) sont bouchés par la mise en contact avec un acide aminophosphonique, tel qu'un acide nitrilotrisméthylène phosphonique.

15. Procédé selon la revendication 10, comprenant en outre l'application d'un revêtement d'apprêt (17) sur la couche externe d'oxyde métallique anodisé (16) avant la liaison du composant composite (19) au composant métallique anodisé (10).
